# EUROPÄISCHE PATENTSCHRIFT

(11) **EP 0 770 772 B1**
(45) Veröffentlichungstag und Bekanntmachung des Hinweises auf die Patenterteilung: **05.01.2000**
(21) Anmeldenummer: 96115415.0
(22) Anmeldetag: 26.09.1996
(51) Int. Cl.: F02D 9/06

(54) **Motorbremsvorrichtung**
Engine braking apparatus
Système de frein moteur

(30) Priorität: 27.10.1995 DE 19540060
(43) Veröffentlichungstag der Anmeldung: 02.05.1997
(73) Patentinhaber: DaimlerChrysler AG, 70567 Stuttgart (DE)
(72) Erfinder: Sumser, Siegfried, 70184 Stuttgart (DE); Schmidt, Erwin, 73666 Baltmannsweiler (DE)

(56) Entgegenhaltungen:
- DE-A- 2 824 598
- DE-A- 3 610 131
- US-A- 4 526 004
- US-A- 5 394 901
- PATENT ABSTRACTS OF JAPAN vol. 017, no. 021 (M-1353), 14.Januar 1993 & JP 04 246237 A (ISUZU MOTORS LTD), 2.September 1992,
- PATENT ABSTRACTS OF JAPAN vol. 94, no. 010 & JP 06 278595 A (JIDOSHA KIKI CO LTD), 4.Oktober 1994,

## Beschreibung

Die Erfindung betrifft eine Motorbremsvorrichtung für eine Brennkraftmaschine gemäß dem Oberbegriff des Anspruchs 1.

Aus der JP-A-4 246 237 ist eine gattungsgemäße Motorbremsvorrichtung für eine aufgeladene Brennkraftmaschine bekannt, die einen Abgasturbolader mit einer Turbine sowie eine Abgasleitung und eine Ansaugleitung umfaßt. Stromauf der Turbine ist in der Abgasleitung eine Abgasabsperrvorrichtung angeordnet, wobei stromauf der Abgasabsperrvorrichtung eine von der Abgasleitung abführende Bypaßleitung vorgesehen ist, die in einen Bereich radial oberhalb eines Turbinenrades einmündet. Es können auch mehrere umfangsmäßig verteilt angeordnete Einmündungen vorgesehen sein.

Eine ähnliche Motorbremsvorrichtung für eine Brennkraftmaschine ist auch in JP-A-6 278 595 gezeigt, in der ebenfalls stromauf einer Turbine eines Abgasturboladers eine Abgasabsperrvorrichtung in der Abgasleitung angeordnet ist und stromauf besagter Absperrvorrichtung eine von der Abgasleitung abführende Bypaßleitung, die radial oberhalb eines Turbinenlaufrades in einen Strömungskanal des Turbinengehäuses einmündet, vorgesehen ist.

Aus der DE 28 24 598 C1 ist eine Motorbremse für eine mit einem Abgasturbolader versehene Brennkraftmaschine bekannt, bei der in einer Abgasleitung zwischen Motor und Turbine eines Turboladers eine Abgasabsperrvorrichtung vorgesehen ist. Diese kann in einer Offenstellung angeordnet sein, bei der die Abgase ungehindert zur Turbine des Turboladers gelangen. In einer Schließstellung des Drehventils kann noch ein Reststrom des Abgases zur Turbine des Turboladers gelangen, durch den ein Turbinenrad der Turbine angetrieben wird.

Des weiteren ist aus der US-PS 3 591 959 eine Motorbremsvorrichtung für eine Brennkraftmaschine bekannt, bei der zwischen einem Motor und einem Abgasturbolader eine Abgasabsperrvorrichtung vorgesehen ist, mit der ein vorderes und hinteres Auslaß-Sammelrohr einer 6-Zylinder-Brennkraftmaschine absperrbar ist.

Der Erfindung liegt die Aufgabe zugrunde, eine Motorbremsvorrichtung für eine Brennkraftmaschine mit einem Abgasturbolader zu schaffen, bei der die Bremsleistung bei geringer Temperaturbelastung von Motor und Abgasleitung erhöht wird.

Diese Aufgabe wird erfindungsgemäß durch die kennzeichnenden Merkmale des Anspruchs 1 gelöst.

Eine vor einer Abgasabsperrvorrichtung angeordnete und abzweigende Bypassleitung, aie in einem Bereich nahe eines Turbinenrades einmündet, weist den Vorteil auf, daß die dem Turbinenrad zugeführte Luftmassen unter hoher Strömungsgeschwindigkeit zugeführt werden, wodurch die Turboladerdrehzahl im Vergleich zu der geschlossenen Abgasabsperrvorrichtung aus dem Stand der Technik nicht gegen Null geht. Dadurch wird die auf der Saugseite der Brennkraftmaschine zugeführte Luftmasse, die deutlich über dem Umgebungsdruck liegt, in die Motorzylinder gepreßt, wodurch insgesamt ein höherer Luftmassendurchsatz in der Brennkraftmaschine erzielt werden kann.

Diese Anordnung hat in Versuchen gezeigt, daß dadurch sogar eine deutliche Erhöhung der Bremsleistung durch die verdichtete Luft, die der Brennkraftmaschine zugeführt wird, realisiert werden kann.

Sodann ist erfindungsgemäß vorgesehen, daß mehrere Düsenöffnungen im Gehäuse des Turbinenrades vorgesehen sind, so daß eine über den Umfang verteilte gleichmäßige Zuführung und Beaufschlagung mit Luftmassen gegeben ist. Dadurch können gleichmäßige Kräfte auf das Turbinenrad wirken, wodurch wiederum eine geringe Lagerbelastung auf die die Welle zwischen Verdichterrad und Turbinenrad aufnehmenden Lager wirken kann.

Nach einer vorteilhaften Ausgestaltung der Erfindung ist vorgesehen, daß die Düsenöffnungen im wesentlichen tangential zum Turbinenrad angeordnet sind. Dadurch wird die drallförmige Einströmung erzielt. Dadurch wird die Turbinenleistung gesteigert und ein höherer Luftmassenstrom ermöglicht.

Nach einer weiteren vorteilhaften Ausgestaltung der Erfindung ist vorgesehen, daß der hinter dem Turbinenrad angebrachte Hitzeschild in geeigneter ausgebildeter Weise auch als Düseneinsatz dienen kann. Dadurch kann in konstruktiv einfacher Ausgestaltung eine wirksame Zuführung der Luftmassen bewirkt werden. Die Bypassleitung mündet dabei vorteilhafterweise in einem hinter dem Radrücken des Turbinenrades liegenden Sammelraum, in dem sich die zugeführte Luftmasse gleichmäßig verteilt und nachfolgend über die Düsenöffnungen dem Turbinenrad zuströmt.

Nach einer weiteren vorteilhaften Ausgestaltung der Erfindung ist vorgesehen, daß die Abgasabsperrvorrichtung und zumindest der Abzweig der Bypassleitung in dem Turbinengehäuse integriert sind. Dadurch kann eine Bauteileminimierung gegeben sein. Zudem führt dies zu einer schnelleren Montage, da eine Montage der Abgasabsperrvorrichtung und das Anbringen eines Abzweigs in der Abgasleitung ausbleiben kann.

Weitere zweckmäßige Ausgestaltungen der Erfindung sind in den Unteransprüchen und in der nachfolgenden Beschreibung angegeben.

Anhand von in der Zeichnung dargestellten bevorzugten Ausführungsbeispielen wird die Erfindung nachfolgend näher erläutert. Es zeigen:
- Fig. 1: eine schematische Darstellung der erfindungsgemäßen Anordnung einer Bremsvorrichtung,
- Fig. 2: eine schematische Querschnittsdarstellung eines Abgasturboladers mit einem Düseneinsatz.

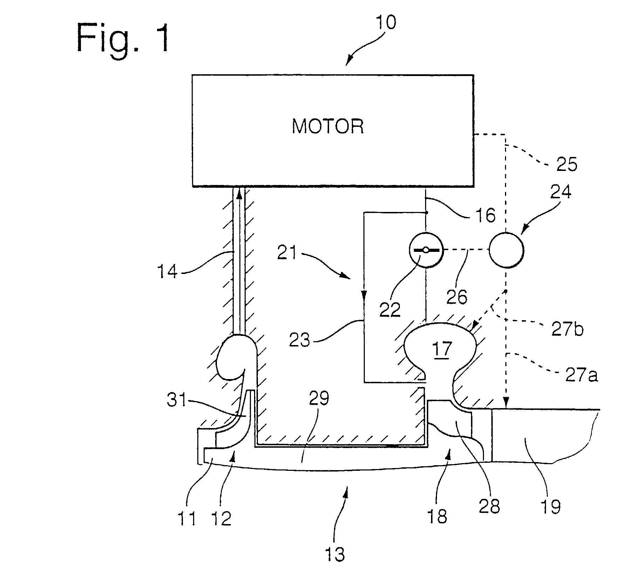

In Fig. 1 ist ein Motor 10 einer mehrzylindrischen Brennkraftmaschine dargestellt. Eine erste Ansaugleitung 11 führt Luftmassen einem Verdichter 12 eines Abgasturboladers 13 zu. Die Luftmasse wird komprimiert und über eine zweite Druckleitung 14 des Verdichters dem Brennraum des Motors 10 zugeführt. Auf einer Abgasseite des Motors 10 ist eine erste Abgasleitung 16 vorgesehen, die in einen Strömungskanal 17 einer Turbine 18 des Abgasturboladers 13 führt. Über eine zweite Abgasleitung 19 stromab der Turbine 18 wird das Abgas über eine Abgasreinigungsanlage (nicht dargestellt) ins Freie geführt.

Auf der Abgasseite des Motors 10 ist eine Motorbremsvorrichtung 21 vorgesehen, die eine Abgasabsperrvorrichtung 22 und eine stromauf der Abgasabsperrvorrichtung 22 abzweigende Bypassleitung 23 aufweist. Parallel zu der Abgasabsperrvorrichtung 22 ist eine Abblasevorrichtung 24 angeordnet, die mit einer ersten Verbindungsleitung 26 gekoppelt ist. Mit der Signalleitung 25 wird die Abblaseeinrichtung geregelt. Je nach geforderter Bremsleistung kann das Abblaseventil, das eine genaue Dosierung der Luftmenge ermöglicht, geöffnet werden. Der Abblasevorrichtung kommt auch die Aufgabe der Überlastungssicherung zu. Ab einem vorgegebenen maximalen Druck hinter den Auslaßventilen wird das Abblaseventil zur Öffnung angesteuert. Die Leitung 27a stromab des Abblaseventils 24 mündet in der Leitung 19. Möglich wäre auch alternativ eine Leitung 27b, die in der Turbinenspirale 17 endet.

Die Abgasabsperrvorrichtung 22 ist als Bremsklappe, vorzugsweise als Schmetterlingsklappe, ausgebildet. Die Bremsklappe 22 entspricht dem Querschnitt der Abgasleitung 16, so daß diese die Abgasleitung 16 im Schiebe- bzw. Bremsbetrieb vollständig schließt. Dadurch baut sich vor dieser Bremsklappe 22 ein Abgasdruck auf. Die aufgestauten Luftmassen strömen dadurch in die Bypassleitung 23, die nahe des Turbinenrades 28 in den Strömungskanal 17 einmündet. Somit kann die Turbinendrehzahl hoch gehalten werden, wodurch das zwangsweise über eine Welle 29 verbundene Verdichterrad 31 die angesaugte Luft komprimiert und dem Motor 10 zuführt. Dadurch ist in diesem System ein erhöhter Luftmassendurchsatz gegeben, wodurch die Temperatur der Luft hinter dem Motor nieder gehalten werden kann.

Die mit der Abgasabsperrvorrichtung 22 in Verbindung stehende Abblasevorrichtung 24 ist als Dosier- und Überdruckventil ausgebildet. Dadurch ist der maximale Staudruck vor der Abgasabsperreinrichtung 22 begrenzbar. Diese Druckbegrenzung weist den Vorteil auf, daß eine Überwachung von ggf. überhöht aufgetretenen Drücken gegeben ist. Zusätzlich bietet dieses Überdruckventil eine Auslegungsmöglichkeit für eine Anhebung des Ladedrucks bei niederen Motordrehzahlen. Mit Hilfe einer intelligenten Regelung des Abblaseventils läßt sich die Bremscharakteristik des Motors vorteilhaft beeinflussen.

Sobald ein zu hoher Staudruck an der Abgasabsperrvorrichtung 22 anliegt, öffnet sich das Überdruckventil, so daß die aufgestauten Luftmassen über die erste und zweite Verbindungsleitung 26, 27a oder 27b in die zweite Abgasleitung 19 bzw. Turbinenspirale 17 abströmen können.

Die Bypassleitung 23 weist einen nicht dargestellten Verteiler auf, der alle Düsenöffnungen 33 versorgt. Alternativ kann vorgesehen sein, daß anstelle der Düsenöffnungen 33 ein Leitgitter in dem Gehäuse 32 vorgesehen ist. Durch die tangentiale Anordnung der Düsenöffnungen 33, die beispielsweise 10° gegenüber einer Eintrittsfläche 36 angeordnet sein können, werden die Luftmassen drallförmig zugeführt. Dadurch kann eine hohe Turbinenleistung bzw. Turbinendrehzahl erreicht werden, die wiederum einen hohen Luftdurchsatz des Motors 10 bewirkt.

Die Düsenöffnungen 33 stellen praktisch den Bremsspalt dar, der dem aus dem Stand der Technik bekannten Bremsklappenspalt mit einer definierten Größe für zugelassene Motorgegendrücke im wesentlichen entspricht. Die Summe der Düsenöffnungsquerschnitte ist in der Größenordnung ausgebildet wie ein Bremsklappenspalt der Abgasabsperrvorrichtung 22, der aus dem Stand der Technik bekannt ist.

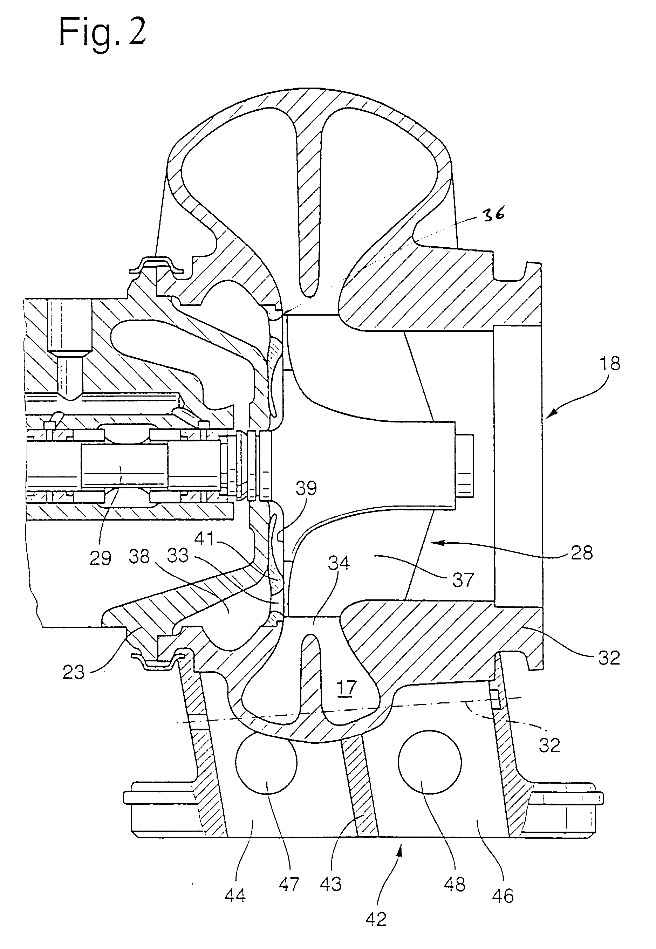

In Fig. 2 mündet die Bypassleitung 23 in einen Sammelraum 38, der hinter einem Radrücken 39 des Turbinenrades 28 radial umlaufend vorgesehen ist. In diesem Sammelraum 38 ist ein Düseneinsatz 41 vorgesehen, der wiederum über den Umfang gleichmäßig verteilte Düsenöffnungen 33 aufweist. Diese sind ebenfalls im wesentlichen tangential zu den Schaufeln 37 des Turbinenrades 28 angeordnet, so daß eine drallförmige Einströmung der zugeführten Luftmassen gegeben ist.

Der Düseneinsatz 41 ist innerhalb des Hitzeschildes, wie dies beispielhaft in Fig. 1 dargestellt ist, angeordnet. Dadurch kann eine einfache und kostengünstige Anordnung eines Düseneinsatzes 41 als auch eine Zuführung über nur eine Einmündung der Bypassleitung 23 in den Sammelraum 38 gegeben sein.

Das in Fig. 2 dargestellte Turbinengehäuse 32 ist für eine 6-Zylinder-Brennkraftmaschine dargestellt. Das Gehäuse 32 weist einen Stutzen 42 mit einer Trennwand 43 auf, wodurch die Luftmassen aus einem vorderen Auslaßsammelrohr und einem hinteren Auslaßsammelrohr 44, 46 getrennt dem Strömungskanal 17 zugeführt werden. Diese Trennwand 43 soll die Stoßaufladung des Motors begünstigen.

In dem Stutzen 42 ist desweiteren eine als Zwillingsklappe 49 ausgebildete Abgasabsperrvorrichtung 22 vorgesehen, die das vordere und hintere Auslaß-Sammelrohr 44, 46 absperrt. Über vor der Abgasabsperrvorrichtung 22 vorgesehene Abzweige 47, 48 können die Luftmassen über jeweils eine Bypassleitung 23 in den Sammelraum 38 geführt werden.

Eine derartige integrierte Anordnung weist den Vorteil auf, daß sowohl die Abgasabsperrvorrichtung 22 als auch die stromauf liegenden Abzweige 44, 46 für die Bypassleitungen 23 in dem Turbinengehäuse 32 angeordnet sind, wodurch ein geringerer Platzbedarf für die Vorrichtung erforderlich wird.

Es kann ein einfach ausgebildeter Stutzen 42 an dem Gehäuse 32 der Turbine 18 gemäß Fig. 2 vorgesehen sein, der einen erfindungsgemäßen Düseneinsatz 41 aufweist.

## Patentansprüche

1. Motorbremsvorrichtung für eine Brennkraftmaschine, die einen Abgasturbolader (13) mit einer Turbine (18) und einem Verdichter (12) sowie eine Abgasleitung (16, 19) und eine Ansaugleitung (11, 14) aufweist und mit mindestens einer stromauf der Turbine (18) in der Abgasleitung (16) angeordneten Abgasabsperrvorrichtung (22), wobei stromauf der Abgasabsperrvorrichtung (22) zumindest eine von der Abgasleitung abführende Bypaßleitung (23) vorgesehen ist, die in einem Bereich nahe eines Turbinenrades (28) einmündet,
**dadurch gekennzeichnet,**
daß die Bypaßleitung (23) in einen hinter einem Radrücken (39) des Turbinenrades (28) angeordneten Sammelraum (38) mündet, in dem mehrere Düsenöffnungen (33) angeordnet sind, über die die durch die Bypaßleitung (23) und den Sammelraum (38) strömende Luftmasse auf den Radrücken (39) des Turbinenrades (28) einströmt, wobei die Düsenöffnungen (33) in einem von 90° verschiedenen Winkel zu einer Einströmfläche (36) eines Turbinengehäuses (32) angeordnet sind.

2. Motorbremsvorrichtung nach Anspruch 1,
**dadurch gekennzeichnet,**
daß die Düsenöffnungen (33) nahezu tangential zur Ebene des Radrückens (39) vom Turbinenrad (28) angeordnet sind.

3. Motorbremsvorrichtung nach Anspruch 1, dadurch gekennzeichnet, daß die Summe der Querschnittsfläche der Düsenöffnungen (33) zumindest einer definierten Größe eines Bremsklappenspaltes für einen zugelassenen Motorgegendruck eines Abgasabsperrventils (22) entspricht.

4. Motorbremsvorrichtung nach Anspruch 1, dadurch gekennzeichnet, daß die Düsenöffnungen (33) in einem in das Gehäuse (32) der Turbine (28) anordenbaren Düseneinsatz (41) vorgesehen sind.

5. Motorbremsvorrichtung nach einem der vorhergehenden Ansprüche, dadurch gekennzeichnet, daß zumindest die Abgasabsperrvorrichtung (22) und der zumindest eine stromauf der Abgasabsperrvorrichtung (22) angeordnete Abzweig für die Bypassleitung (23) in dem Gehäuse (32) der Turbine (28) angeordnet sind.

6. Motorbremsvorrichtung nach einem der vorhergehenden Ansprüche, dadurch gekennzeichnet, daß zumindest die Abgasabsperrvorrichtung (22) über eine Verbindungsleitung (26) mit einer Abblasevorrichtung (24) in Verbindung steht, dessen stromab angeordnete Verbindungsleitung (27a bzw. 27b) in die Abgasleitung (19) bzw. Turbinenspirale (17) einmündet.

7. Motorbremsvorrichtung nach Anspruch 6, dadurch gekennzeichnet, daß die Abblasevorrichtung (24) als Überdruckventil ausgebildet ist und auf einen maximalen Staudruck vor der Abgasabsperrvorrichtung (22) einstellbar ist.

8. Motorbremsvorrichtung nach Anspruch 6 oder 7, dadurch gekennzeichnet, daß das Abblaseventil (24) über eine Regelungseinrichtung (25) angesteuert wird.

9. Motorbremsvorrichtung nach einem der Ansprüche 6 bis 8, dadurch gekennzeichnet, daß die Abblasevorrichtung (24) mit einem Motormanagement kennfeldgeregelt ansteuerbar ist.

10. Motorbremsvorrichtung nach einem der Ansprüche 6 bis 9, dadurch gekennzeichnet, daß mit einer elektronischen Regelung einer Ventilstellung der Abblasevorrichtung (24) bei vollständig geschlossener Abgasabsperrvorrichtung (22) die Bremscharakteristik des Motors (10) veränderbar ist.

11. Motorbremsvorrichtung nach einem der vorhergehenden Ansprüche, dadurch gekennzeichnet, daß die Abgasleitung (16) in einer Schließstellung der Abgasabsperrvorrichtung (22) im wesentlichen vollständig absperrbar ist.

## Claims

1. An engine braking device for an internal combustion engine, which has an exhaust-gas turbocharger (13) with a turbine (18) and a compressor (12) as well as an exhaust gas pipe (16, 19) and an intake pipe (11, 14) and having at least one exhaust-gas shut-off (22) device arranged in the exhaust-gas pipe (16) upstream of the turbine (18), at least one bypass line (23) branching off from the exhaust-gas pipe being provided upstream of the exhaust-gas shut-off device (22) and opening in a region close to a turbine impeller (28),
**characterised in that**
the bypass line (23) opens into a manifold chamber (38) arranged downstream of an impeller back (39) of the turbine impeller (28), a plurality of nozzle orifices (33) being arranged therein, through which the air mass flowing through the bypass line (23) and manifold chamber (38) flow onto the impeller back (39) of the turbine impeller (28), the nozzle orifices (33) being arranged at an angle that differs from an inflow surface (36) of a turbine housing (32) by 90°.

2. An engine braking device as claimed in claim 1,
characterised in that
the nozzle orifices (33) are arranged almost at a tangent to the plane of the impeller back (39) of the turbine impeller.

3. An engine braking device as claimed in claim 1, characterised in that the sum of the cross-section surface areas of the nozzle orifices (33) corresponds at least to a defined size of a brake valve gap for a permissible engine counter-pressure of an exhaust-gas shut-off valve (22).

4. An engine braking device as claimed in claim 1, characterised in that the nozzle orifices (33) are provided in a nozzle insert (41) which can be mounted in the housing (32) of the turbine (28).

5. An engine braking device as claimed in one of the preceding claims, characterised in that at least the exhaust-gas shut-off device (22) and the at least one branch arranged upstream of the exhaust-gas shut-off device (22) for the bypass line (23) are arranged in the housing (32) of the turbine (28).

6. An engine braking device as claimed in one of the preceding claims, characterised in that at least the exhaust-gas shut-off device (22) is connected via a connecting line (26) to a blower device (24), the connecting line (27a or 27b) of which, arranged upstream, opens into the exhaust-gas pipe (19) or turbine spiral (17).

7. An engine braking device as claimed in claim 6, characterised in that the blower device (24) is designed as a safety valve and can be adjusted to a maximum back-pressure upstream of the exhaust-gas shut-off device (22).

8. An engine braking device as claimed in claim 6 or 7, characterised in that the blow valve (24) is controlled by means of a control device (25).

9. An engine braking device as claimed in one of claims 6 to 8, characterised in that the blower device (24) can be controlled by means of an engine management system on the basis of characteristic curves.

10. An engine braking device as claimed in one of claims 6 to 9, characterised in that the braking characteristics of the engine (10) can be adjusted by electronically controlling a valve position of the blower device (24) when the exhaust-gas shut-off device is fully closed (22).

11. An engine braking device as claimed in one of the preceding claims, characterised in that the exhaust-gas pipe (16) can be substantially fully closed off when the exhaust-gas shut-off device (22) is in a closed position.

## Revendications

1. Dispositif de frein-moteur pour un moteur à combustion interne, qui comporte un turbocompresseur à gaz d'échappement (13) équipé d'une turbine (18) et d'un compresseur (12), ainsi qu'un conduit d'échappement (16, 19) et un conduit d'aspiration (11, 14) et qui comporte au moins un dispositif (22) de blocage des gaz d'échappement, qui est disposé en amont de la turbine (18) dans le conduit d'échappement (16), et dans lequel il est prévu en amont du dispositif (22) de blocage des gaz d'échappement, au moins une canalisation de dérivation (23), qui s'étend en dérivation à partir du conduit d'échappement et débouche dans une zone proche d'un rotor (28) de la turbine, caractérisé en ce que la canalisation de dérivation (23) débouche dans un espace de collecte (38) qui est situé en arrière d'un dos (39) du rotor (28) de la turbine et dans lequel sont disposées plusieurs ouvertures de buses (33), au moyen desquelles la masse d'air, qui circule dans la canalisation de dérivation (23) et dans la chambre de collecte (38), arrive sur le dos (39) du rotor (28) de la turbine, les ouvertures (33) des buses étant disposées sous un angle différent de 90° par rapport à une surface (36) d'arrivée d'écoulement d'un carter (32) de la turbine.

2. Dispositif de frein-moteur selon la revendication 1, caractérisé en ce que les ouvertures (33) des buses sont disposées approximativement tangentiellement au plan du dos (39) du rotor (28) de la turbine.

3. Dispositif de frein-moteur selon la revendication 1, caractérisé en ce que la somme des surfaces en coupe transversale des ouvertures (33) des buses correspond au moins à une grandeur définie d'une fente de volet de freinage pour une contre-pression du moteur autorisée d'une soupape (22) de blocage des gaz d'échappement.

4. Dispositif de frein-moteur selon la revendication 1, caractérisé en ce que les ouvertures (33) des buses sont prévues dans un insert à buses (41) pouvant être disposé dans le carter (32) de la turbine (28).

5. Dispositif de frein-moteur selon l'une des revendications précédentes, caractérisé en ce qu'au moins le dispositif (22) de blocage des gaz d'échappement et la au moins une dérivation disposée en amont du dispositif (22) de blocage des gaz d'échappement, pour la canalisation de dérivation (23), sont disposés dans le carter (39) de la turbine (28).

6. Dispositif de frein-moteur selon l'une des revendications précédentes, caractérisé en ce qu'au moins le dispositif (22) de blocage des gaz d'échappement est relié par l'intermédiaire d'une canalisation de raccordement (26) à un dispositif d'évacuation (24), dont la canalisation de raccordement (27a ou 27b) disposée en aval débouche dans le conduit d'échappement (19) ou dans la volute (17) de la turbine.

7. Dispositif de frein-moteur selon la revendication 6, caractérisé en ce que le dispositif d'évacuation (24) est agencé sous la forme d'une soupape de surpression et est réglable sur une pression de refoulement maximale en amont du dispositif (22) de blocage des gaz d'échappement.

8. Dispositif de frein-moteur selon la revendication 6 ou 7, caractérisé en ce que la soupape d'évacuation (24) est commandée par l'intermédiaire d'un dispositif de régulation (25).

9. Dispositif de frein-moteur selon l'une des revendications 6 à 8, caractérisé en ce que le dispositif d'évacuation (24) peut être commandé, d'une manière réglée en fonction d'un champ de caractéristiques, par une unité de gestion du moteur.

10. Dispositif de frein moteur selon l'une des revendications 6 à 9, caractérisé en ce que, lorsque le dispositif (22) de blocage des gaz d'échappement est complètement fermé, la caractéristique de freinage du moteur (10) est modifiée au moyen d'une régulation électronique d'une position de la soupape du dispositif d'évacuation (24).

11. Dispositif de frein moteur selon l'une des revendications précédentes, caractérisé en ce que lorsque le dispositif (22) de blocage des gaz d'échappement est dans une position fermée, le conduit d'échappement (16) peut être sensiblement complètement bloqué.
